# EUROPÄISCHE PATENTSCHRIFT

(11) **EP 2 604 104 B1**
(45) Veröffentlichungstag und Bekanntmachung des Hinweises auf die Patenterteilung: **12.10.2016**
(21) Anmeldenummer: 12008245.8
(22) Anmeldetag: 11.12.2012
(51) Int. Cl.: A01D 17/10

(54) **Erntemaschine für Kartoffeln, Rüben o. dgl. Erntegut**
Harvesting machine for potatoes, beets or similar crops
Moissonneuse pour pommes de terre, betteraves ou produits agricoles analogues

(30) Priorität: 16.12.2011 DE 102011121180
(43) Veröffentlichungstag der Anmeldung: 19.06.2013
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Deters, Frank

(56) Entgegenhaltungen:
- DE-U1- 9 414 130
- US-A- 2 718 110
- US-A- 3 227 276
- US-A- 3 442 379

## Beschreibung

Die Erfindung betrifft eine Erntemaschine für Kartoffeln, Rüben o. dgl. Erntegut, mit einer ein Rodegemisch aufnehmenden Siebvorrichtung gemäß dem Oberbegriff des Anspruchs 1.

Maschinen zum Ernten von Kartoffeln, Rüben o. dgl. Hackfrüchten basieren auf unterschiedlichen Ausführungen von mechanischen Aggregaten, mit denen das aus dem Boden gerodete Erntegut von dabei erfassten Verunreinigungen wie Steinen, Kluten o. dgl. Beimengungen getrennt wird. Bei einem bereits aus DE 10 41 718 bekannten System wird das Rodegemisch aus einem Kartoffeldamm mittels einer Schar ausgehoben und durch ein Förderband in eine Reinigungsstrecke mit Siebvorrichtung überführt. Bei einer Kartoffelerntemaschine gemäß DE 10 72 422 ist eine Siebvorrichtung mit einer Siebkette vorsehen, wobei diese ausgehend vom vorderen Schar ansteigend entgegen der Fahrtrichtung der Maschine bewegt wird und damit eine Aussiebung des Erntegutes aus dem Rodegemisch erfolgt. Ähnliche Konstruktionen mit einer das Erntegut von den Beimengungen trennenden Siebvorrichtung sind in DE 31 70 73 und DE 66 07 825 sowie DE 23 26 215 gezeigt.

Bekannt sind auch Siebvorrichtungen für Erntemaschinen, bei denen zusätzliche Bewegungen bzw. Anregungen auf ein jeweiliges Fördertrum des Siebförderbandes eingeleitet werden, so dass damit der Trennvorgang verbessert wird. Bei einem System gemäß EP 0 216 098 B1 wird mit sich ändernden Winkelgeschwindigkeiten die Anregung des Siebförderbandes erreicht. Bei einer Siebfördervorrichtung gemäß DE 94 14 130 U1 ist das eine Siebzone bildende Arbeitstrum des Siebförderbandes mit einrückbaren Stellmitteln versehen. Diese Stellmittel sind als einzelne Hilfselemente dem das zugeführte Rodegemisch aufnehmenden Fördertrum zugeordnet, so dass durch Ausbildung zumindest einer "vertikalen" Stufe eine wellenförmig veränderte Wirkzone - mit entsprechender "Fallbeschleunigung" des Rodegemisches - am Siebförderband vorgegeben wird. Diese in ihrer jeweiligen Stufenhöhe einstellbaren Fallstufen erzeugen eine Relativbewegung der Teile des Rodegemischs, wobei das Absieben von Erdreich verstärkt wird, gleichzeitig jedoch eine Beschädigung des Erntegutes, insbesondere von Kartoffeln, nicht auszuschließen ist. Die Einbaulage des gesamten Siebförderbandes innerhalb der Vorrichtung weist eine konstante Steigung in Förderrichtung auf.

Ein System mit einrückbarem Stellmittel ist auch in US 3 227 276 A und US 3 442 379 A gezeigt. Die "wellenförmige" oder geneigte Förderzone ist dabei an einem Förderer vorgesehen, der nicht unmittelbar am Rodeaggregat ansetzt und damit bereits "vorgesiebtes" Gemisch aufnimmt. Bei einer Konstruktion gemäß US 2 718 110 A sind in Förderrichtung zwei Förderbänder nebeneinander angeordnet, die zwar in der Neigung verstellbar sind, aber keine längsgerichteten Förderzonen mit Verstellmöglichkeit aufweisen.

Aus EP 1 297 731 A1 ist ein Kartoffelroder bekannt, bei dem ausgehend vom Rodewerkzeug ein erstes Siebförderband und ein zweites Siebförderband vorgesehen sind. Diese beiden Förderbänder wirken im Bereich einer zwischen liegenden Fallstufe zusammen. Die beiden Förderbänder definieren dabei jeweils einen Steigungsabschnitt mit konstantem Steigungswinkel, so dass das Rodegemisch über gleichmäßig steigende Siebzonen nach oben gefördert wird.

Die Erfindung befasst sich mit dem Problem, die Siebvorrichtung im Bereich des jeweiligen verlagerbaren Fördertrums mit geringem technischem Aufwand so an sich ändernde Bodenverhältnisse anpassbar zu gestalten, dass durch eine weitgehend automatisierbare Veränderung der jeweiligen Förderbedingungen eine schonende Trennung des im Rodegemisch enthaltenen Erntegutes möglich ist.

Die Erfindung löst dieses Problem durch eine Erntemaschine mit den Merkmalen des Anspruchs 1. Hinsichtlich wesentlicher weiterer Ausgestaltungen wird auf die Ansprüche 2 bis 21 verwiesen.

Die Erntemaschine ist in erfindungsgemäßer Ausführung mit einer Siebfördervorrichtung versehen, bei der das Siebförderband zumindest im Bereich seines einen Fördertrums so einstellbar ist, dass das zugeführte Rodegemisch wahlweise entlang unterschiedlich ansteigender Förderschrägen weiterbewegt werden kann. Durch "gleichmäßige" Teilbereiche des Fördertrums werden Siebzonen definiert, die eine schonende Verlagerung des Erntegutes ermöglichen. Dabei ist vorgesehen, dass in Förderrichtung des Siebförderbandes jeweilige Steigungsabschnitte mit unterschiedlichen Steigungswinkeln nutzbar sind. Diese Förderschrägen sind dabei als "stufenlose" und weitgehend kontinuierlich ineinander übergehende Teilbereiche des Fördertrums einstellbar ausgeführt.

Das von den Rodescharen aufgenommene Rodegemisch kann - entsprechend den jeweiligen Bodenverhältnissen - unterschiedliche Konsistenzen aufweisen, wobei sich das Erntegut beispielsweise in einem sandige und/oder lehmige Strukturen enthaltenden Gemisch befindet. Mit der erfindungsgemäßen Einstellbarkeit von Förderschrägen im Bereich des Fördertrums des Siebbandförderers kann auf diese Bodenverhältnisse schnell reagiert und zu weitgehend beliebigen Zeitpunkten der Erntephase mit unterschiedlichen Förderschrägen auf wechselnde Boden- und/oder Feuchtebedingungen reagiert werden. Die Siebwirkung des Systems kann durch gezielte Verstellungen des Steigungswinkels am Fördertrum bzw. im Bereich einer jeweiligen Siebzone so optimiert werden, dass bei schonender Behandlung des permanent in einer Aufwärtsrichtung verlagerbaren Erntegutes gleichzeitig eine jeweils optimale Absiebung von Bodenstrukturen im Bereich der Siebzone erfolgt.

Entsprechend der jeweiligen Länge des Siebförderbandes können jeweilige veränderbare Teilbereiche der zumindest einen Siebzone genutzt werden. Dazu sind jeweilige Förderschrägen entlang des Siebförderbandes variabel vorgebbar. Ausgehend von einer im System definierbaren horizontalen Bezugsebene kann das Siebförderband im Bereich von mehreren Förderschrägen auch auf jeweils unterschiedliche Neigungswinkel bzw. Steigungen eingestellt werden.

Mittels zumindest einer von Hand oder motorisch zu betätigenden Stellbaugruppe können die als Förderschrägen definierten Teilbereiche des Siebförderbandes stufenlos eingestellt werden. Dabei ist auch denkbar, die Förderschrägen während einer bereits laufenden Förderphase zu verändern. Ebenso ist eine weitgehend automatische Veränderung der Förderschrägen denkbar.

Die konstruktive Ausführung ermöglicht es, dass entlang des Fördertrums mehr als nur zwei Teilbereiche mit jeweils veränderbarer Förderschräge vorgesehen sein können. Es hat sich gezeigt, dass das Siebförderband vorteilhaft mit jeweiligen zwischen 0° und 60°, vorzugsweise zwischen 15° und 40°, veränderbaren Neigungswinkeln im Bereich der Förderschrägen optimale Siebwirkungen aufweisen kann. Diese Neigungswinkel können im Bereich der Förderschrägen jeweils gleich bemessen werden. Vorgesehen ist, dass jeweilige Teilbereiche des Fördertrums auf jeweils unterschiedliche Neigungswinkel eingestellt werden und damit in Förderrichtung variierende Siebbedingungen wirksam sind. Diese Einstellungen der Förderschrägen können abschnittsweise einzeln erfolgen. Ebenso ist denkbar, dass eine gemeinsame, insbesondere gleichzeitige Einstellung sämtlicher Teilbereiche des Fördertrums erfolgt.

Die konstruktive Umsetzung dieses erfindungsgemäßen Konzeptes mit verstellbaren Förderschrägen sieht vor, dass das Siebförderband zumindest im Bereich ihres sich von der vorderen Umlenkrolle zu einer hinteren Umlenkrolle erstreckenden Fördertrums eine deren - in Querrichtung der Maschine gegenüberliegende - Seitenränder erfassende Stellvorrichtung aufweist. An dieser sind - vorzugsweise von unten - mit dem Fördertrum des Siebförderbandes zusammenwirkende Führungselemente vorgesehen, so dass eine Stellbewegung im Bereich der Stellvorrichtung mittels der Führungselemente auf das Fördertrum übertragen wird.

Diese Führungselemente sind dabei einzeln oder gemeinsam so verlagerbar, dass ausgehend von der den Anfangsbereich der Siebzone definierenden vorderen Umlenkrolle jeweilige Veränderungen der Förderschrägen in den von den Führungselementen definierbaren Teilbereichen bewirkt ist. Durch eine Anordnung mehrerer entlang der Siebzone beabstandeter Führungselemente ist denkbar, diese gruppenweise zu verlagern. Damit kann eine Vielzahl von Teilbereichen mit unterschiedlichen Förderschrägen entlang des Fördertrums gebildet werden, derart, dass das Rodegemisch auf "steilen" und "weniger steilen" Teilbereichen verlagert wird und dabei unterschiedlich intensive Siebphasen wirksam werden.

Ausgehend von einer an sich bekannten Tragrahmen-Konstruktion der Maschine - bei der das Siebförderband bzw. dessen Seitenränder zwischen gegenüberliegenden Rahmenteilen aufgenommen ist - ist für die erfindungsgemäße Konstruktion mit der auf das Fördertrum wirkenden Stellvorrichtung eine zusätzliche zweite Rahmenstruktur in das Maschinensystem integriert. Diese zweite Rahmenstruktur ist innerhalb des ersten Maschinen-Rahmens so angeordnet, dass eine Konstruktion nach Art eines Rahmen-in-Rahmen-Systems gebildet wird und dabei die zweite innere Rahmenstruktur eine Basisbaugruppe für die erfindungsgemäße Einstellbarkeit der Förderschrägen am Siebförderband bildet.

Die an sich bekannten Führungselemente in Form von Rollenkörpern sind an der mit der inneren Rahmenstruktur zusammenwirkenden Stellvorrichtung so gehalten, dass dieses Rollen-System einzeln oder gemeinsam verlagerbare Elemente bildet. Ebenso kann vorgesehen sein, dass die Führungselemente gruppenweise verlagert werden können.

In Verbesserung der bekannten Anordnungen mit Siebförderbändern - bei denen das Siebförderband unmittelbar mittels einer Umlenkrolle an die Rodeschare anschließt - ist vorgesehen, dass ausgehend von dieser vorderen Umlenkrolle insbesondere ein von dieser bis hin zum ersten Führungselement ablaufender Teilbereich des Fördertrums besonders variabel auf die unterschiedlichen Förderschrägen einstellbar ausgebildet werden kann. Aus der Anwendung eines einstückig umlaufenden Bandes für das Siebförderband ergibt sich, dass dieser vordere Teilbereich des Fördertrums (im Bereich der vorderen Umlenkrolle bis zum ersten der Führungselemente) jeweils relativ zum verbleibenden Teil des Fördertrums - in Form der nachfolgenden Siebzone - auf die unterschiedlichen Förderschrägen eingestellt werden kann.

Für die konstruktive Umsetzung dieser Bauteilkombination aus Führungselementen, Stellvorrichtung und Stellorgan sind verschiedene Ausführungsvarianten denkbar. Eine vorteilhaft einfache Ausführung wird dadurch erreicht, dass die Führungselemente an einer Tragschiene gehalten sind, die nach dem Prinzip des vorbeschriebenen Rahmen-in-Rahmen-Systems beweglich mit der inneren Rahmenstruktur verbindbar ist. Dabei ist vorgesehen, dass bei einer Verlagerung der Tragschiene um einen endseitigen Drehpunkt eine Veränderung des Neigungswinkels erfolgt. Dabei wird der zwischen dem Drehpunkt und dem am anderen Ende der Tragschiene vorgesehenen Führungselement verlaufende Teilbereich des Fördertrums bewegt. Dabei kann gleichzeitig der zur vorderen Umlenkrolle (bzw. dem Rodeschar) hin verlaufende vordere Teilbereich ebenfalls "mitverschwenkt" werden, da die Umlenkrolle vorzugsweise ortsfest abgestützt ist. Damit ist im Verlauf des Fördertrums eine Siebzone gebildet, die zumindest zwei Teilbereiche mit unterschiedlicher Förderschräge aufweist.

Eine weitere Ausführungsform dieser Einstellbarkeit mittels der verlagerbaren Führungselemente sieht vor, dass jeweils zumindest eines der Führungselemente an zumindest zwei Tragsektionen der zweiten Rahmenstruktur gehalten ist. Diese Tragsektionen sind mittels des zumindest einen Stellorgans relativ zueinander verlagerbar an der inneren Rahmenstruktur abgestützt. Mit Blick auf die gesamte Konstruktion der Maschine versteht es sich, dass in Querrichtung gegenüberliegend jeweils zwei paarweise zusammenwirkende Tragsektionen mittels einer durch das Stellorgan einleitbaren Schwenk- und/oder Schubbewegung verlagerbar sind. Die Führungselemente werden dabei so mitbewegt, dass damit die Förderschrägen der benachbarten Teilbereiche des Fördertrums in ihrem jeweiligen Maß des Neigungswinkels verändert werden.

Die konstruktive Gestaltung des Systems sieht vor, dass für die Stellvorrichtung wahlweise ein mechanisch, elektrisch und/oder hydraulisch antreibbares Stellorgan vorgesehen werden kann. Ebenso ist denkbar, dass die Stellvorrichtung mit mehreren Stellorganen versehen wird. Die jeweilige Steuerung bzw. Regelung dieser Stelleinheit kann vorteilhaft über ein Bedienteil im Zugfahrzeug der Maschine erfolgen. Ebenso ist denkbar, mittels sensorisch erfasster und in einem Steuerprogramm verarbeiteter Messdaten eine weitgehend automatische Regelung bzw. Verstellung der Förderschrägen zu aktivieren.

Ausgehend von dem vorbeschriebenen Konzept der Siebvorrichtung mit veränderbaren Förderschrägen kann diese Basislösung prinzipiell auch auf ein Sieb-System in Erntemaschinen übertragen werden, bei dem die Siebzone von jeweiligen Fördertrums mehrerer hintereinander angeordneter Siebförderbänder gebildet ist. Dabei kann eine effiziente Ausgestaltung dadurch erreicht werden, dass zumindest das unmittelbar an die Rodeschare anschließende Siebförderband mit einer Stütz- und Stellkonstruktion versehen wird, die hier die Einstellung unterschiedlicher Förderschrägen ermöglicht. Ebenso ist denkbar, die hintereinander angeordneten Siebförderbänder einzeln oder gemeinsam auf entsprechende Förderschrägen mit optimalen Trennwirkungen einzustellen.

Weitere Einzelheiten und Vorteile ergeben sich aus der nachfolgenden Beschreibung und der Zeichnung, in der mehrere Ausführungsbeispiele des Gegenstands der erfindungsgemäßen Siebvorrichtung schematisch näher veranschaulicht sind. In der Zeichnung zeigen:
- Fig. 1: eine perspektivische Ausschnittsdarstellung einer Erntemaschine mit darin vorgesehener Siebfördervorrichtung in einer ersten Ausführung,
- Fig. 2: eine teilweise geschnittene Seitenansicht der Erntemaschine gemäß einer Linie II-II in Fig. 1 mit einer das Siebförderband untergreifenden Stellvorrichtung,
- Fig. 3: eine Seitenansicht ähnlich Fig. 2, wobei das Siebförderband mittels der Stellvorrichtung in eine veränderte Nutzstellung verlagert ist,
- Fig. 4: eine Seitenansicht ähnlich Fig. 2 mit einer das Siebförderband aufnehmenden Stellvorrichtung in einer zweiten Ausführung,
- Fig. 5: eine Seitenansicht ähnlich Fig. 4, wobei das Siebförderband in eine zweite Nutzstellung verlagert ist,
- Fig. 6: eine perspektivische Ausschnittsdarstellung der Erntemaschine mit der Siebfördervorrichtung in einer zweiten Ausführung,
- Fig. 7: die Siebfördervorrichtung gemäß Fig. 6 mit zwei Siebförderbändern in einer Schnittdarstellung gemäß einer Linie VI-VI in Fig. 6, und
- Fig. 8: eine Seitenansicht ähnlich Fig. 7 mit den beiden Siebförderbändern in veränderter Gebrauchslage.

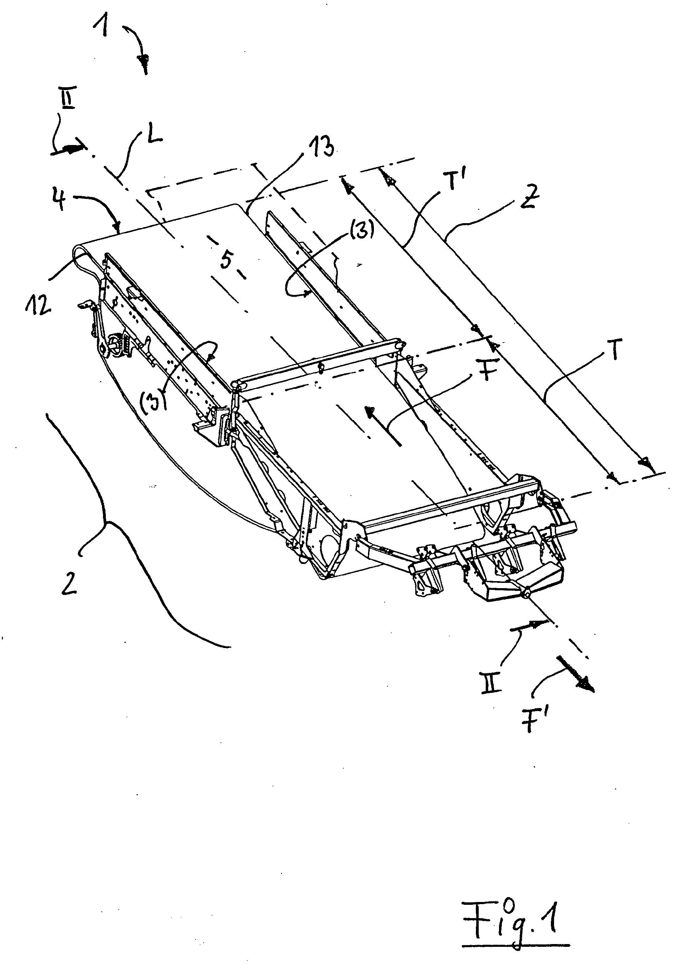

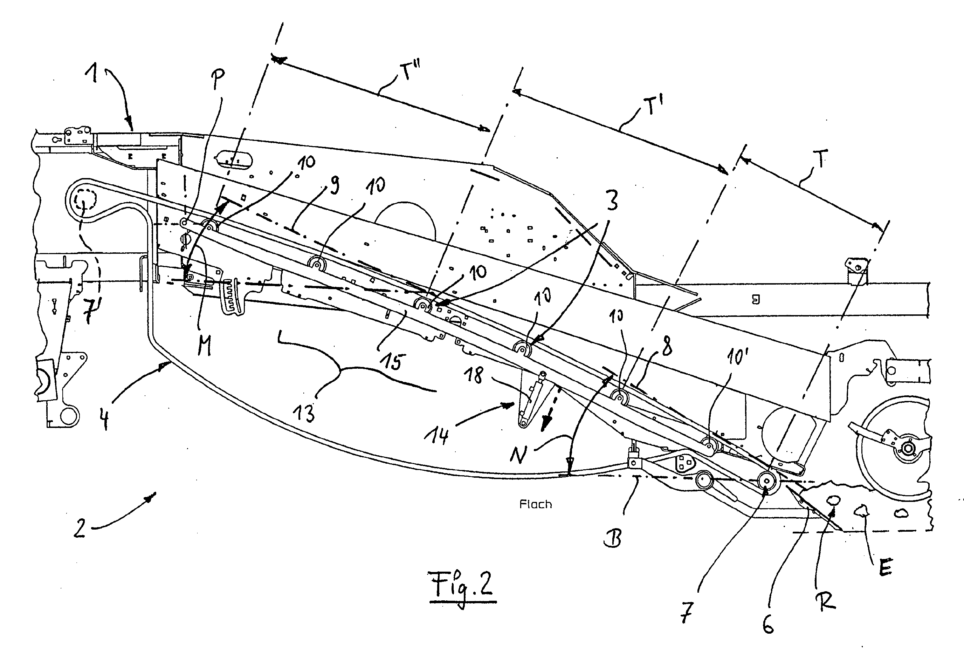

In Fig. 1 ist eine insgesamt mit 1 bezeichnete Erntemaschine für Kartoffeln, Rüben o. dgl. Erntegut E (Fig. 2) dargestellt, wobei die Maschine 1 mit einer ein Rodegemisch R aufnehmenden Siebfördervorrichtung 2 versehen ist. Diese weist zumindest ein mittels jeweiliger seitlicher Führungselemente 3 an den Längsseitenrändern abstützbares Siebförderband 4 auf. Dabei bildet zumindest ein oben liegendes und entgegen der Fahrtrichtung F' verlagerbares Fördertrum 5 des Siebförderbandes 4 eine Siebzone Z, die zumindest im Bereich einer an vordere Rodeschare 6 anschließenden Umlenkrolle 7 in Förderrichtung F ansteigend ausrichtbar ist (Fig. 2).

Ausgehend von dieser bekannten Gestaltung einer Siebfördervorrichtung 2 sieht das erfindungsgemäße Konzept vor, dass das Siebförderband 4 im Bereich seines zumindest einen Fördertrums 5 so eingestellt werden kann, dass für das aufgenommene Rodegemisch R unterschiedliche Förderschrägen 8, 8'; 9, 9' wirksam werden und damit die Reinigungswirkung dieser Siebfördervorrichtung 2 über einen großen Bereich variabel angepasst werden kann.

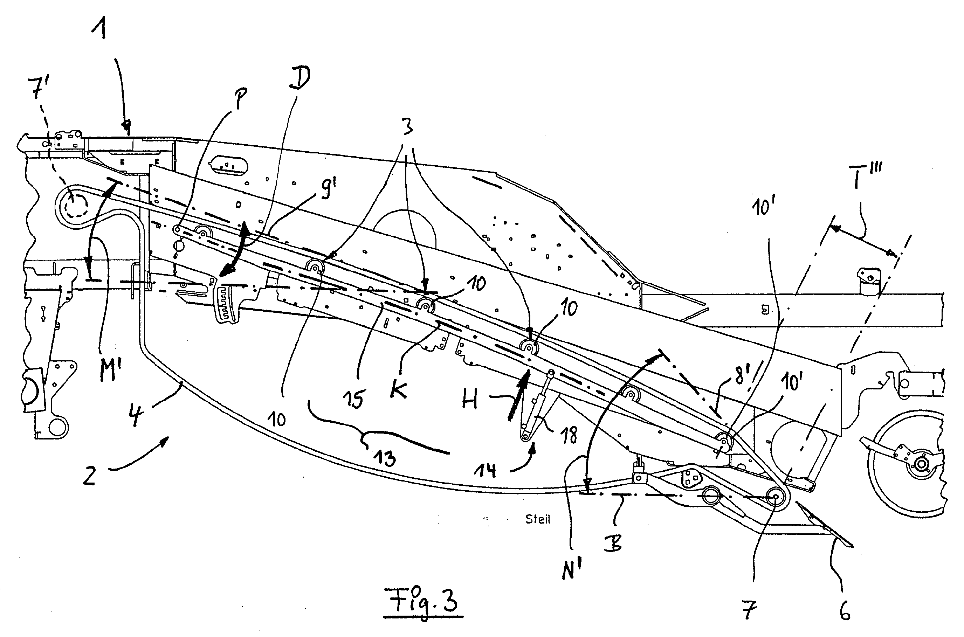

Die Einstellbarkeit der jeweiligen Förderschrägen 8, 8'; 9, 9' ist darauf abgestellt, dass in der zumindest einen Siebzone Z jeweilige in ihrer Länge variabel veränderbare bzw. einstellbare Teilbereiche T, T' (Fig. 1) definiert werden können und damit diese Siebvorrichtungen 2 optimal an das Erntegut E, beispielsweise im Bereich eines Kartoffelernters oder Rübenernters, angepasst werden können. Aus den Seitenansichten gemäß Fig. 2 bis Fig. 5 wird deutlich, dass das Siebförderband 4 ausgehend von einer horizontalen Bezugsebene B jeweils auf unterschiedliche Neigungswinkel N, N'; M, M' einstellbare Förderschrägen 8, 8'; 9, 9' aufweist (Fig. 2, Fig. 3).

Im praktischen Test hat es sich als vorteilhaft herausgestellt, dass das Siebförderband 4 jeweilige zwischen 0° und 60°, vorzugsweise zwischen 15° und 40°, veränderbare Neigungswinkel N, M im Bereich der Förderschrägen 8, 9 aufweist. Die Konstruktion dieses verbesserten Siebförderbandes 4 sieht vor, dass die Förderschräge des Siebförderbandes 4 insbesondere stufenlos verändert bzw. eingestellt werden kann. Dabei ist auch denkbar, dass die Förderschrägen 8, 8'; 9, 9' während einer Förderphase verändert werden und dabei schnell auf sich ändernde Rodebedingungen reagiert werden kann.

Aus der Darstellung gemäß Fig. 2 wird deutlich, dass entlang des Fördertrums 5 mehr als zwei - nämlich drei - Teilbereiche T, T', T" mit jeweils veränderbarer Förderschräge entsprechend dem gezeichneten Verlauf vorgesehen sind. Dies ist nur ein Beispiel einer denkbaren Erweiterung des variablen Stell-Systems, wobei aus den dazu vorliegenden Seitenansichten beispielsweise auch die Ausbildung der Führungselemente 3 in Form jeweiliger Führungsrollen 10 deutlich wird und durch die Flexibilität des Bandes 4 auch im Bereich jeder dieser Führungsrollen 10 eine Veränderung der anschließenden Förderschräge denkbar ist, derart, dass das gesamte Fördertrum 5 einen einer Kontur K (Fig. 3) folgenden "konvexen Bogenverlauf' (ausgehend von der vordersten Führungsrolle 10) aufweisen kann.

In Ansehung dieser konstruktiven Varianten wird deutlich, dass die Teilbereiche T, T', T" des Fördertrums 5 auf jeweils gleiche oder auch unterschiedliche Neigungswinkel 9, 9' einstellbar sein können. Dabei sind Konstruktionen denkbar, bei denen die Teilbereiche T, T', T" durch eine gemeinsame Einstellung beeinflusst werden. Ebenso ist denkbar, dass die jeweiligen Förderschrägen der Teilbereiche T, T', T" einzeln eingestellt werden.

Zur Verwirklichung der vorbeschriebenen Konstruktionsmerkmale ist vorgesehen, dass das Siebförderband 4 zumindest im Bereich des sich von der vorderen Umlenkrolle 7 zu einer hinteren Umlenkrolle 7' erstreckenden Fördertrums 5 eine deren in Querrichtung gegenüberliegende Seitenränder 11, 12 (Fig. 1) erfassende Stellvorrichtung 13, 13' aufweist, die mit zumindest einem Stellorgan 14, 14' die Führungselemente 3 bzw. die Führungsrollen 10, 10' verlagerbar abstützt. Dem Verlauf des Siebförderbandes 4 entsprechend ist vorgesehen, dass mittels der Stellvorrichtung 13, 13' ausgehend von der vorderen Umlenkrolle 7 der von dieser bis hin zum ersten Führungselement 10' ablaufende Teilbereich T"' (Fig. 3) des Fördertrums 5 relativ verlagert wird, so dass zu dem einen bzw. den mehreren verbleibenden Teilbereich(en) T', T" des Fördertrums 5 hin die unterschiedlich "steilen" Förderschrägen 8' wirksam werden.

Das Konzept dieser Stellvorrichtung 13, 13' sieht vor, dass die jeweiligen Führungselemente 3 bzw. 10, 10' jeweils einzeln oder gemeinsam verlagerbar abgestützt sein können. Bei der in Fig. 2 dargestellten ersten Ausführungsform der Stellvorrichtung 13 ist vorgesehen, dass die Führungselemente 3 bzw. 10, 10' eine gemeinsam verstellbare Gruppe bilden.

Bei der Ausführung der Stellvorrichtung 13 gemäß Fig. 2 und Fig. 3 sind die Führungselemente 10, 10' an einer mit dem Stellorgan 14 verbundenen Tragschiene 15 gehalten. Diese Tragschiene 15 schafft die Möglichkeit, dass bei deren Verlagerung um einen endseitigen Drehpunkt P die zwischen diesem und dem anderen Ende vorgesehenen Führungselemente 10, 10' ebenfalls bewegt werden und damit die im Fördertrum 5 definierten Teilbereiche T, T', T", T'" so verändert werden, dass für den Bearbeitungsvorgang optimale Förderschrägen eingestellt sind. In der dargestellten Ausführung gemäß Fig. 2 und Fig. 3 ist der endseitige Drehpunkt P an dem der vorderen Führungsrolle 10' gegenüberliegenden Ende angeordnet, so dass die vorbeschriebene Schwenkbewegung (Pfeil D, Fig. 3) mittels des als Hubzylinder 18 ausgebildeten Stellorgans 14 in einer Hubrichtung H (Fig. 3) aktiviert wird und damit ausgehend von der "flachen" Gebrauchslage gemäß Fig. 2 die "steile" Gebrauchslage gemäß Fig. 3 - zumindest im Bereich T'" - eingestellt ist (Winkel N, N').

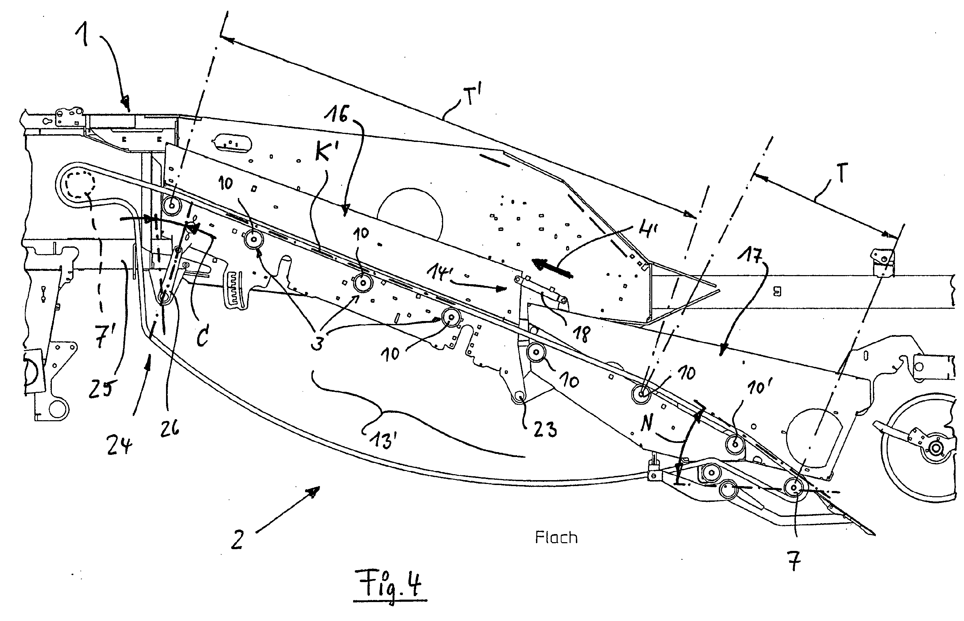

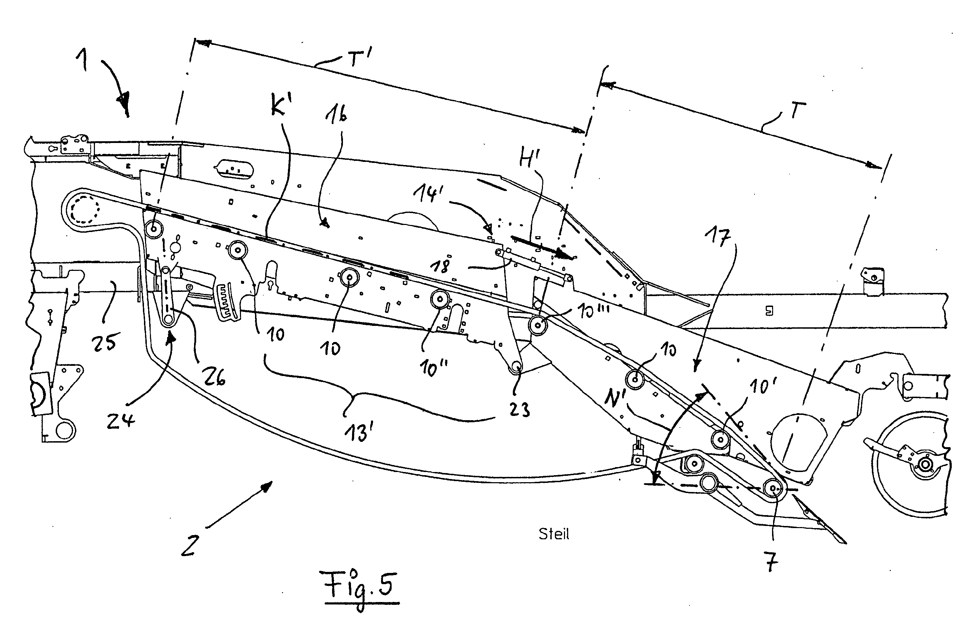

In Fig. 4 und Fig. 5 ist eine zweite Ausführung der Stellvorrichtung 13' dargestellt, wobei jeweils zumindest eine der Führungsrollen 10, 10' an zumindest zwei mittels des zumindest einen Stellorgans 14' relativ zueinander verlagerbar abgestützten Tragsektionen 16, 17 gehalten ist. In der dargestellten Ausführung sind an den Tragsektionen 16, 17 jeweilige Gruppen von Führungsrollen 10 dargestellt, wobei diese bzw. die Tragsektionen 16, 17 unter Wirkung des ebenfalls als Hydraulikzylinder 18 ausgebildeten Stellorgans 14' in einer jeweiligen Hubrichtung H' verlagert werden. Dabei wird deutlich, dass die Tragsektionen im Bereich eines Verbindungsgelenkes 23 verbunden sein können, so dass eine Verlagerung in die Spreizstellung (Fig. 5) bzw. eine Rückführung aus dieser (Fig. 4) möglich ist.

Für eine vorteilhafte gleichzeitige Verlagerung der Tragsektionen 16, 17 wirkt das Verbindungsgelenk 23 mit einer am gegenüberliegenden Ende der Tragsektion 16 befindlichen Schwenkeinheit 24 zusammen, die einen am Maschinenrahmen 25 gelenkig abgestützten Stützhebel 26 aufweist. Damit kann eine zur Verlagerung H' synchrone Schwenkbewegung C (Fig. 4) ausgeführt werden. Dabei wird der Teilbereich T ausgehend von den beabstandeten Führungsrollen 10" und 10"' (Fig. 5) insgesamt verlagert und der Teilbereich T "nach vorn" gekippt. Ebenso ist denkbar, dass zwar der vordere Teilbereich T in seiner Förderschräge verändert wird, mittels der Bewegungsmöglichkeit bei C der Teilbereich T' aber nur durch "verschobene" Führungsrollen 10, 10" beeinflusst ist und die Förderkontur K' in diesem Bereich weitgehend unverändert bleiben kann (Fig. 5).

Damit macht die Zusammenschau von Fig. 2 bis Fig. 5 deutlich, dass die Führungselemente 10, 10' der jeweils in Querrichtung gegenüberliegenden Tragschienen 15 bzw. Tragsektionen 16, 17 mittels einer durch das jeweilige Stellorgan 14, 14' einleitbaren Schwenk- und/oder Schubbewegung H, H' verlagerbar sind und damit die jeweiligen Förderschrägen der benachbarten Teilbereiche T, T', T", T'" des Fördertrums 5 durch unterschiedliche Wirkprinzipien vorteilhaft veränderbar sind. Die beabsichtigte Veränderung von das Rodegemisch R beeinflussenden Wirkparametern im Bereich des mit unterschiedlicher "Steilheit" verlaufenden Siebförderbandes 4 ist damit in weiten Grenzen möglich.

Es versteht sich, dass die Stellvorrichtung 13, 13' mit variabel einsetzbaren Stellorganen 14, 14' versehen sein kann, wobei diese wahlweise mechanisch, elektrisch und/oder hydraulisch antreibbar sind. In der dargestellten Ausführung wird jeweils der Hydraulikzylinder 18 verwendet. Ebenso ist vorgesehen, dass im Bereich der Stellvorrichtung 13, 13' auch mehrere der Stellorgane 14, 14' vorgesehen sein können.

Mit Blick auf die zur Längsmittelebene L weitgehend spiegelbildliche Abstützung des Siebförderbandes 4 versteht es sich, dass die in den Darstellungen auf eine Seite der Maschine 1 bezogenen Konstruktionsteile im Bereich der Stellvorrichtungen 13, 13' entsprechend spiegelbildlich auf der gegenüberliegenden Seite vorgesehen sind.

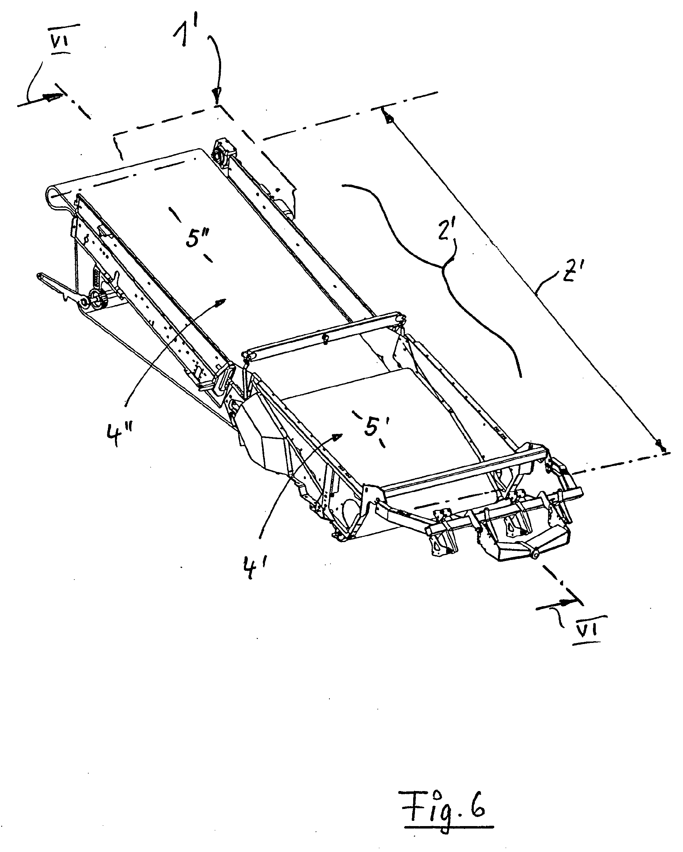

In den Darstellungen gemäß Fig. 6 bis Fig. 8 ist eine zweite Ausführung der Erntemaschine 1' dargestellt, die eine der vorbeschriebenen Gestaltung ähnliche Siebvorrichtung 2' aufweist. Die aus den vorhergehenden Zeichnungen gemäß Fig. 1 bis Fig. 5 ersichtlichen und in ihrer Wirkung bereits erfassten Teile im wesentlichen gleicher Ausbildung werden nicht nochmals sämtlich übernommen, um die Übersichtlichkeit zu gewährleisten.

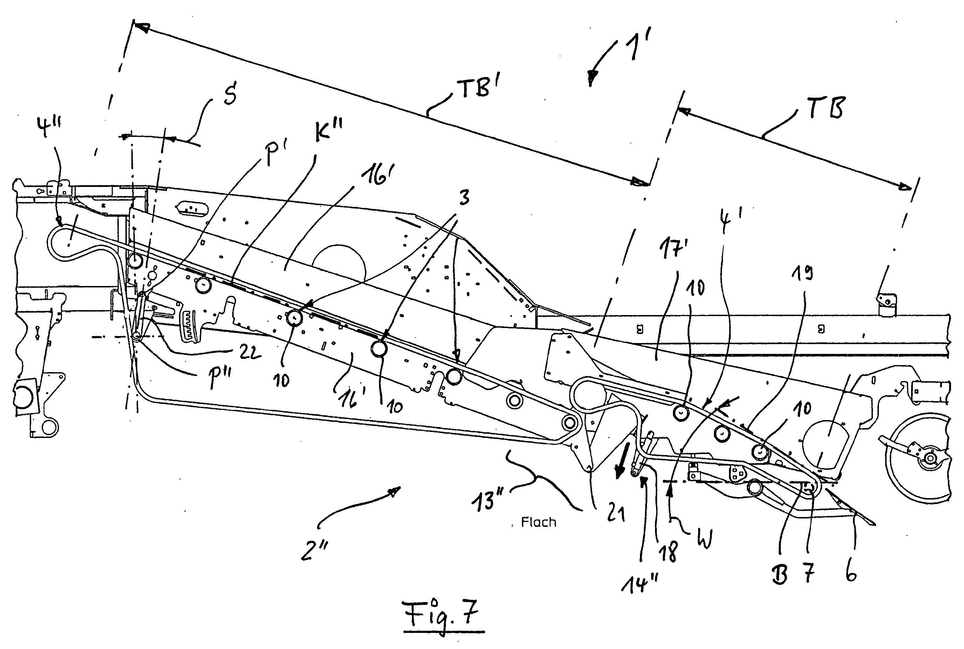

Diese Konstruktion gemäß Fig. 6 zeichnet sich dadurch aus, dass die zwei Teilbereiche TB und TB' (Fig. 7) aufweisende Siebzone Z' von mehreren - insbesondere zwei - Siebförderbändern 4' und 4" gebildet ist. Unter Ausnutzung des bereits in Fig. 1 bis Fig. 5 erörterten Wirkprinzips ist bei dieser Maschine 1' bzw. der Siebvorrichtung 2' vorgesehen, dass zumindest das unmittelbar an die Rodeschare 6 (Fig. 7) anschließende Siebförderband 4' auf unterschiedliche Förderschrägen 19, 20 einstellbar ist. Ebenso ist denkbar, auch das zweite Förderband 4" mit einstellbaren Förderschrägen zu versehen (nicht dargestellt) oder in konstruktiv veränderter Ausführung nur das Siebförderband 4" auf unterschiedliche Förderschrägen einstellbar auszubilden.

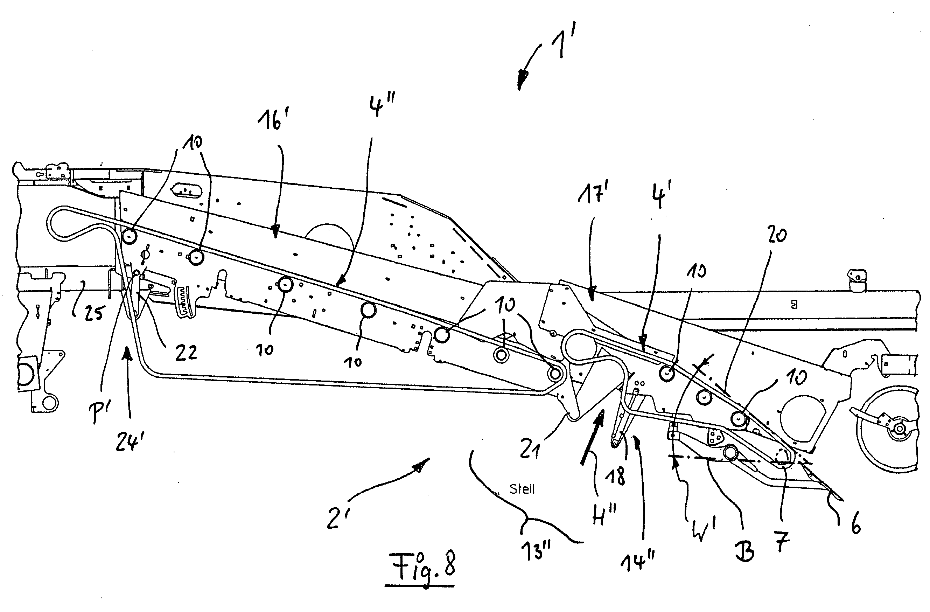

Das zumindest eine für die Einstellbarkeit des Siebförderbandes 4' erforderliche Stellorgan 14" kann dabei wahlweise für nur das eine oder beide Siebförderbänder 4', 4" verwendet werden. Für eine gemeinsame Verstellung (ohne Änderung der Förderschräge im Teilbereich TB') ist vorgesehen, dass die die Führungselemente 3 der beiden Siebförderbänder 4, 4' aufnehmenden Tragsektionen 16' und 17' im Bereich eines Gelenkes 21 verbunden sind (Fig. 7, Fig. 8), so dass hier prinzipielle Wirkverstellungen ähnlich der Ausführung in Fig. 4 und Fig. 5 möglich sind.

Für diese gemeinsame Einstellung der Teilbereiche TB und TB' ist die Tragsektion 16' an ihrem dem Gelenk 21 gegenüberliegenden Ende in einem Punkt P' an einem Stützhebel 22 gehalten, wobei dieser seinerseits einen rahmenseitigen Stützpunkt P" bildet. Durch Bewegung des Stellorgans 14" in einer Hubrichtung H" kann das vordere Siebförderband 4' in die vorgesehene Neigungsstellung (Winkel W) verlagert werden, und gleichzeitig wird die Bewegung im Bereich des Gelenkes 21 auf die Tragsektion 16' übertragen, wobei diese ihrerseits um einen Schwenkwinkel S im Bereich des Stützhebels 22 bewegt wird und die Führungselemente 3 gemeinsam nach oben schwenken oder im wesentlichen entlang einer Konturlinie K" verschoben werden.

## Patentansprüche

1. Erntemaschine für Kartoffeln, Rüben o. dgl. Erntegut (E), mit einer ein Rodegemisch (R) aufnehmenden Siebfördervorrichtung (2), die zumindest ein mittels jeweiliger seitlicher Führungselemente (3) abstützbares Siebförderband (4) aufweist, wobei zumindest ein oben liegendes und entgegen der Fahrtrichtung (F') verlagerbares Fördertrum (5) des Siebförderbandes (4) eine Siebzone (Z) bildet, die zumindest im Bereich einer an vordere Rodeschare (6) anschließenden Umlenkrolle (7) in Förderrichtung (F) ansteigend ausrichtbar ist, **dadurch gekennzeichnet, dass** das Siebförderband (4) im Bereich des zumindest einen Fördertrums (5) auf unterschiedliche Förderschrägen (8, 8'; 9, 9') einstellbar ist und mit der Einstellbarkeit der Förderschräge (8, 8'; 9, 9') jeweilige veränderbare Teilbereiche (T, T', T") der zumindest einen Siebzone (Z) definiert sind, wobei das Siebförderband (4) zumindest im Bereich des sich von der vorderen Umlenkrolle (7) zu einer hinteren Umlenkrolle (7') erstreckenden Fördertrums (5) eine deren in Querrichtung gegenüberliegende Seitenränder (11, 12) erfassende Stellvorrichtung (13, 13') aufweist, die mit zumindest einem Stellorgan (14, 14') die Führungselemente (3; 10, 10') verlagerbar abstützt.

2. Erntemaschine nach Anspruch 1, **dadurch gekennzeichnet, dass** das Siebförderband (4) ausgehend von einer horizontalen Bezugsebene (B) auf unterschiedliche Neigungswinkel (N, N'; M, M') einstellbare Förderschrägen (8, 8'; 9, 9') aufweist.

3. Erntemaschine nach Anspruch 1 oder 2, **dadurch gekennzeichnet, dass** das Siebförderband (4) jeweilige zwischen 0° und 60°, vorzugsweise zwischen 15° und 40°, veränderbare Neigungswinkel (N, N'; M, M') im Bereich der Förderschrägen (8, 8'; 9, 9') aufweist.

4. Erntemaschine nach einem der Ansprüche 1 bis 3, **dadurch gekennzeichnet, dass** die zumindest eine Förderschräge (8, 8'; 9, 9') des Siebförderbandes (4) stufenlos einstellbar ist.

5. Erntemaschine nach einem der Ansprüche 1 bis 4, **dadurch gekennzeichnet, dass** die Förderschräge(n) (8, 8'; 9, 9') während einer Förderphase (Pfeil F) veränderbar ist/sind.

6. Erntemaschine nach einem der Ansprüche 1 bis 5, **dadurch gekennzeichnet, dass** entlang des Fördertrums (5) mehr als zwei Teilbereiche (T, T', T") mit jeweils veränderbarer Förderschräge (8, 8'; 9, 9') vorgesehen sind.

7. Erntemaschine nach Anspruch 6, **dadurch gekennzeichnet, dass** die Teilbereiche (T, T', T") des Fördertrums (5) auf jeweils unterschiedliche Neigungswinkel (8, 8'; 9, 9') einstellbar sind.

8. Erntemaschine nach Anspruch 6 oder 7, **dadurch gekennzeichnet, dass** die Teilbereiche (T, T', T") gemeinsam einstellbar sind.

9. Erntemaschine nach einem der Ansprüche 6 bis 8, **dadurch gekennzeichnet, dass** die Teilbereiche (T, T', T") einzeln einstellbar sind.

10. Erntemaschine nach einem der Ansprüche 1 bis 9, **dadurch gekennzeichnet, dass** die Führungselemente (10, 10') einzeln, gemeinsam oder gruppenweise verlagerbar sind.

11. Erntemaschine nach einem der Ansprüche 1 bis 10, **dadurch gekennzeichnet, dass** ausgehend von der vorderen Umlenkrolle (7) der von dieser bis hin zum ersten Führungselement (10') ablaufende Teilbereich (T"') in Bezug zu dem bzw. den verbleibenden Teilbereich(en) (T', T") des Fördertrums (5) die jeweils unterschiedlichen Förderschrägen (8, 8') einnimmt, derart, dass an einen steilen Teilbereich (T"') ein flacherer Teilbereich (T', T") anschließt.

12. Erntemaschine nach einem der Ansprüche 1 bis 11, **dadurch gekennzeichnet, dass** die Führungselemente (3; 10, 10') an einer mit dem Stellorgan (14) verbundenen Tragschiene (15) gehalten sind, derart, dass bei deren Verlagerung um einen endseitigen Drehpunkt (P) die zwischen diesem und dem am anderen Ende vorgesehenen Führungselement (10') verlaufenden Teilbereiche (T, T', T", T"') des Fördertrums (5) veränderbar ist.

13. Erntemaschine nach Anspruch 12, **dadurch gekennzeichnet, dass** die die rollenförmigen Führungselemente (10, 10') abstützende Tragschiene (15) in Längsrichtung eine zumindest bereichsweise bogenförmige, insbesondere zur Unterseite des Siebförderbandes (4) konvex ausrichtbare Kontur (K) aufweist.

14. Erntemaschine nach einem der Ansprüche 1 bis 13, **dadurch gekennzeichnet, dass** im Bereich der Stellvorrichtung (13') zumindest zwei mittels des zumindest einen Stellorgans (14') relativ zueinander verlagerbar abgestützte Tragsektionen (16, 17) vorgesehen sind und an diesen jeweils zumindest eines der Führungselemente (10, 10') gehalten ist.

15. Erntemaschine nach Anspruch 14, **dadurch gekennzeichnet, dass** eine der durch ein Gelenk (23) verbundenen Tragsektionen (16) anderenends mit einer eine Schwenk-Schub-Bewegung (C) aufnehmenden Hebelabstützung (24) versehen ist.

16. Erntemaschine nach einem der Ansprüche 1 bis 15, **dadurch gekennzeichnet, dass** die Führungselemente (10, 10') der jeweils in Querrichtung gegenüberliegenden Tragschienen (15) bzw. Tragsektionen (16, 17) mittels einer durch das Stellorgan (14, 14') einleitbaren Schwenk- und/oder Schubbewegung (H, H') verlagerbar sind und damit die Förderschrägen (8, 8'; 9, 9') der benachbarten Teilbereiche (T, T', T", T'") des Fördertrums (5) veränderbar sind.

17. Erntemaschine nach einem der Ansprüche 1 bis 16, **dadurch gekennzeichnet, dass** die Stellvorrichtung (13, 13') ein mechanisch, elektrisch und/oder hydraulisch antreibbares Stellorgan (14, 14') aufweist.

18. Erntemaschine nach Anspruch 17, **dadurch gekennzeichnet, dass** im Bereich der Stellvorrichtung (13, 13') mehrere Stellorgane (14, 14') vorgesehen sind.

19. Erntemaschine nach einem der Ansprüche 1 bis 18, **dadurch gekennzeichnet, dass** die Siebzone (Z') von den jeweiligen Fördertrums (5, 5") mehrerer Siebförderbänder (4', 4") gebildet ist und zumindest das unmittelbar an die Rodeschare (6) anschließende Siebförderband (4') auf unterschiedliche Förderschrägen (19, 20) einstellbar ist.

20. Erntemaschine nach Anspruch 19, **dadurch gekennzeichnet, dass** beide Siebförderbänder (4', 4") einstellbare Förderschrägen (19, 20; 19', 20') aufweisen.

21. Erntemaschine nach Anspruch 19 oder 20, **dadurch gekennzeichnet, dass** mittels eines Stellorgans (14") wahlweise das eine oder beide Siebförderbänder (4', 4") einstellbar sind.

## Claims

1. Harvester for potatoes, beets or similar harvested material (E), comprising a screen conveyor device (2) that receives a harvested mix (R) and has at least one screen conveyor belt (4) which can be supported by respective lateral guide elements (3), at least one upper conveying side (5) of the screen conveyor (4) which is movable counter to the direction of travel (F') forms a screening zone (Z) which can be oriented so as to be inclined in the conveying direction (F) at least in the region of a return roller (7) which adjoins leading digging shares (6), **characterised in that** the screen conveyor belt (4) in the region of the at least one conveying side (5) is adjustable to different conveying inclines (8, 8'; 9, 9') and the adjustability of the conveying inclines (8, 8'; 9, 9') defines respective adjustable portions (T, T', T") of the at least one screening zone (Z), the screen conveyor belt (4) comprising, at least in the region of the conveying side (5) that extends from the leading return roller (7) to a rear return roller (7'), an adjusting device (13, 13') which contacts lateral edges (11, 12) of said conveying side that are positioned so as to be opposing in the transverse direction and movably supports the guide elements (3; 10, 10') by means of at least one adjusting member (14, 14').

2. Harvester according to claim 1, **characterised in that**, proceeding from a horizontal reference plane (B), the screen conveyor belt (4) comprises conveying inclines (8, 8'; 9, 9') which are adjustable to different inclination angles (N, N'; M, M').

3. Harvester according to either claim 1 or claim 2, **characterised in that**, in the region of the conveying inclines (8, 8'; 9, 9'), the screen conveyor belt (4) has respective inclination angles (N, N'; M, M') which are adjustable between 0° and 60°, preferably between 15° and 40°.

4. Harvester according to any of claims 1 to 3, **characterised in that** the at least one conveying incline (8, 8'; 9, 9') of the screen conveyor belt (4) is adjustable continuously.

5. Harvester according to any of claims 1 to 4, **characterised in that** the conveying incline(s) (8, 8'; 9, 9') is/are adjustable during a conveying phase (arrow F).

6. Harvester according to any of claims 1 to 5, **characterised in that** more than two portions (T, T', T") are provided with respectively adjustable conveying inclines (8, 8'; 9, 9') along the conveying side (5).

7. Harvester according to claim 6, **characterised in that** the portions (T, T', T") of the conveying side (5) are adjustable to inclination angles (8, 8'; 9, 9') which are different in each case.

8. Harvester according to either claim 6 or claim 7, **characterised in that** the portions (T, T', T") are jointly adjustable.

9. Harvester according to any of claims 6 to 8, **characterised in that** the portions (T, T', T") are individually adjustable.

10. Harvester according to any of claims 1 to 9, **characterised in that** the guide elements (10, 10') are movable individually, jointly or in groups.

11. Harvester according to any of claims 1 to 10, **characterised in that**, proceeding from the leading return roller (7), the portion (T'") that extends from said leading return roller to the first guide element (10') receives, relative to the remaining portion(s) (T', T") of the conveying side (5), the conveying inclines (8, 8') that are each different in such a way that a more planar portion (T', T") adjoins a steep portion (T"').

12. Harvester according to any of claims 1 to 11, **characterised in that** the guide elements (3; 10, 10') are held on a support rail (14) which is connected to the adjusting member (15) in such a way that, when said support rail is moved about a terminal pivot point (P) of the support rail, the portions (T, T', T", T"') of the conveying side (5) which extend between said terminal pivot point and the guide element (10') provided at the other end are adjustable.

13. Harvester according to claim 12, **characterised in that** the support rail (15) which supports the roller-shaped guide elements (10, 10') in the longitudinal direction has a contour (K) that is arc-shaped at least in regions and in particular can be aligned convexly relative to the underside of the screen conveyor belt (4).

14. Harvester according to any of claims 1 to 13, **characterised in that** at least two support sections (16, 17), which are supported by the at least one adjusting member (14') so as to be movable relative to one another, are provided in the region of the adjusting device (13') and at least one of the guide elements (10, 10') is held on each support section.

15. Harvester according to claim 14, **characterised in that** one of the support sections (16) connected by a joint (23) is provided at the other end with a lever support (24) that accommodates a pivot-push movement (C).

16. Harvester according to any of claims 1 to 15, **characterised in that** the guide elements (10, 10') of the support rails (15) or support sections (16, 17), which are in each case opposite one another in the transverse direction, are movable by means of a pivot and/or push movement (H, H') which can be introduced by the adjustment member (14, 14') and therefore the conveying inclines (8, 8'; 9, 9') of the adjacent portions (T, T', T", T"') of the conveying side (5) are adjustable.

17. Harvester according to any of claims 1 to 16, **characterised in that** the adjusting device (13, 13') has a mechanically, electrically and/or hydraulically drivable adjusting member (14, 14').

18. Harvester according to claim 17, **characterised in that** a plurality of adjusting members (14, 14') are provided in the region of the adjusting device (13, 13').

19. Harvester according to any of claims 1 to 18, **characterised in that** the screening zone (Z') is formed by the respective conveying sides (5, 5") of the plurality of screen conveyor belts (4' 4") and at least the screen conveyor belt (4') that directly adjoins the digging shares (6) is adjustable to different conveying inclines (19, 20).

20. Harvester according to claim 19, **characterised in that** both screen conveyor belts (4', 4") have adjustable conveying inclines (19, 20; 19', 20').

21. Harvester according to either claim 19 or claim 20, **characterised in that** one or both screen conveyor belts (4', 4") are selectively adjustable by means of an adjusting member (14").

## Revendications

1. Machine à récolter les pommes de terre, les navets ou des produit de récolte analogues (E), comprenant un dispositif de transport et de criblage qui reçoit un mélange de produits arrachés (R) et qui comporte au moins une bande de transport et de criblage (4) supportée par des éléments de guidage latéraux respectifs (3), au moins un brin supérieur (5), déplaçable dans le sens opposé au sens de déplacement, de la bande de transport et de criblage (4) formant une zone de tamisage (Z) qui peut être orientée de façon montante dans le sens de transport (F) au moins dans la région d'un rouleau de renvoi (7) adjacent aux socs d'arrachage avant (6), **caractérisée en ce que** la bande de transport et de criblage (4) peut être réglée à différents plans de transport inclinés (8, 8' ; 9, 9') dans la région de l'au moins un brin de transport (5) et **en ce que** des régions partielles respectives (T, T', T") de l'au moins une zone de ciblage sont définies qui sont variables avec la possibilité de réglage des plans de transport inclinés (8, 8' ; 9, 9'), la bande de transport et de criblage (4) comportant, au moins dans la région du brin de transport (5) qui s'étend du rouleau de renvoi avant (7) à un rouleau de renvoi arrière (7'), un dispositif de réglage (13, 13') qui détecte les bords latéraux (11, 12) opposés par référence à la direction transversale et qui supporte de manière déplaçable les éléments de guidage (3 ; 10, 10') avec au moins un élément de réglage (14, 14').

2. Machine à récolter selon la revendication 1, **caractérisé en ce que** la bande de transport et de criblage (4) présentent des plans de transport inclinés (8, 8', 9, 9') réglables à des angles d'inclinaison (N, N' ; M, M') différents à partir d'un plan de référence horizontal (B).

3. Machine à récolter selon la revendication 1 ou 2, **caractérisée en ce que** la bande de transport et de criblage (4) présente des angles d'inclinaison respectifs (N, N', M, M') qui sont variables entre 0° et 60°, de préférence entre 15° et 40°, dans la région des plans de transport inclinés (8, 8'; 9, 9').

4. Machine à récolter selon l'une des revendications 1 à 3, **caractérisée en ce que** l'au moins un plan de transport incliné (8, 8'; 9, 9') de la bande de transport et de criblage (4) est réglable en continu.

5. Machine à récolter selon l'une des revendications 1 à 4, **caractérisée en ce que** le ou les plans de transport inclinés (8, 8' ; 9, 9') sont variables au cours d'une phase de transport (flèche F).

6. Machine à récolte selon l'une des revendications 1 à 5, **caractérisée en ce que**, le long du brin de transport (5), plus de deux régions partielles (T, T', T") sont pourvues chacune d'un plan de transport incliné variable (8, 8' ; 9, 9').

7. Machine à récolter selon la revendication 6, **caractérisée en ce que** les zones partielles (T, T', T") du brin de transport (5) sont réglables chacune à des angles d'inclinaison (8, 8' ; 9, 9').

8. Machine à récolter selon la revendication 6 ou 7, **caractérisée en ce que** les zones partielles (T, T', T") sont réglables conjointement.

9. Machine à récolter selon l'une des revendications 6 à 8, **caractérisée en ce que** les zones partielles (T, T' , T") sont réglables individuellement.

10. Machine à récolter selon l'une des revendications 1 à 9, **caractérisé en ce que** les éléments de guidage (10, 10') sont déplaçables individuellement, conjointement ou par groupes.

11. Machine à récolter selon l'une des revendications 1 à 10, **caractérisée en ce que** à partir du rouleau de renvoi avant (7) la région partielle (T"') s'étendant depuis ce rouleau jusqu'au premier élément de guidage (10') par rapport à la ou aux régions partielles restantes (T', T") du brin de transport (5) occupent les plans de transport inclinés (8, 8') de telle sorte qu'une partie partielle plus plate (T', T") est adjacente à une région partielle à forte pente.

12. Machine à récolter selon l'une des revendications 1 à 11, **caractérisée en ce que** les éléments de guidage (3 ; 10, 10') sont maintenus sur un rail de support (15) raccordé à l'élément de réglage (14) de telle sorte que, lorsque le rail de support se déplace autour d'un point de pivotement (P) à une extrémité, les régions partielles (T, T', T", T"') du brin de transport (5), qui s'étendent entre ce point de pivotement et l'élément de guidage (10') prévu à l'autre extrémité, peuvent varier.

13. Machine à récolter selon la revendication 12, **caractérisée en ce que** le rail de support (15), qui supporte les éléments de guidage (10, 10') en forme de rouleaux, présente dans la direction longitudinale un contour (K) au moins partiellement en forme d'arc et orientable de façon convexe en particulier par rapport au côté inférieur de la bande de transport et de criblage (4).

14. Machine à récolter selon l'une des revendications 1 à 13, **caractérisée en ce qu'**il est prévu dans la région du dispositif de réglage (13') au moins deux sections de support (16, 17) supportées de façon déplaçable l'une par rapport à l'autre au moyen de l'au moins un élément de réglage (14') et au moins un des éléments de guidage (10, 10') est supporté par chacune de celles-ci.

15. Machine à récolter selon la revendication 14, **caractérisée en ce qu'**une section de support (16), reliée par une articulation (23), est pourvue à l'autre extrémité d'un support à levier (24) recevant un mouvement de poussée et de pivotement (C).

16. Machine à récolter selon l'une des revendications 1 à 15, **caractérisé en ce que** les éléments de guidage (10, 10') des rails de support (15) ou des sections de support (16, 17), opposés par référence à la direction transversale, peuvent être déplacés par mouvement de poussée et/ou de pivotement (H, H') commandé par l'actionneur (14, 14') et les plans de transport inclinés (8, 8', 9, 9') des régions partielles (T, T', T", T"') du brin de transport (5) sont donc variables.

17. Machine à récolter selon l'une des revendications 1 à 16, **caractérisée en ce que** le dispositif de réglage (13, 13') comporte un élément de réglage (14, 14') à entraînement mécanique, électrique et/ou hydraulique.

18. Machine à récolter selon la revendication 17, **caractérisée en ce qu'**une pluralité d'éléments de réglage (14, 14') sont prévus dans la région du dispositif de réglage (13, 13').

19. Machine à récolter selon l'une des revendications 1 à 18, **caractérisée en ce que** la zone de criblage (Z') est formée par le brin de transport respectif (5, 5") de plusieurs bandes de transport et de criblage (4', 4") et au moins la bande de transport et de criblage (4'), immédiatement adjacente aux socs d'arrachage (6), peut être réglée à plans de transport différents (19, 20).

20. Machine à récolter selon la revendication 19, **caractérisée en ce que** les deux bandes de transport et de criblage (4', 4") ont des plans de transport réglables (19, 20 ; 19', 20').

21. Machine à récolter selon la revendication 19 ou 20, **caractérisée en ce que** l'une des bandes de transport et de criblage (4', 4") ou les deux sont réglables au moyen d'un élément de réglage (14").
